# EUROPEAN PATENT SPECIFICATION

(11) **EP 4 349 625 B1**
(45) Date of publication and mention of the grant of the patent: **24.12.2025**
(21) Application number: 22199821.4
(22) Date of filing: 05.10.2022
(51) Int. Cl.: B60J 10/24, B60J 10/30, B60J 10/79

(54) **SEALING STRAND AND SEALING ARRANGEMENT FOR A VEHICLE**
DICHTUNGSSTRANG UND DICHTUNGSANORDNUNG FÜR EIN FAHRZEUG
CORDON D'ÉTANCHÉITÉ ET DISPOSITIF D'ÉTANCHÉITÉ POUR UN VÉHICULE

(43) Date of publication of application: 10.04.2024
(73) Proprietor: Cooper Standard GmbH, 88131 Lindau (DE)
(72) Inventor: BRAUN, Christian, 88131 Lindau (DE); BRIALES, Marco, 88131 Lindau (DE)
(74) Representative: Witte, Weller & Partner Patentanwälte mbB

(56) References cited:
- DE-C2- 3 921 760
- JP-A- S61 115 712
- US-A- 5 209 019
- US-A1- 2003 019 160
- US-A1- 2020 086 728

## Description

### BACKGROUND

The present invention relates to a sealing strand for sealing a gap between a fixed structure, as for example a B-pillar of a vehicle or an applique, and a moveable structure, as for example a sliding window, the gap having as gap dimension in a first direction and extending in a second direction which is essentially orthogonal to the first direction, the sealing strand comprising a carrier section which is preferably made of a relatively hard material, and a sealing section which is preferably made of a relatively soft material, wherein the carrier section includes a fastening portion adapted to attach the sealing strand to the fixed structure.

Vehicles, particularly automobiles, include a number of sealing arrangements for sealing an interior of the vehicle against the outside, for example at interior access areas like doors, flaps, lids etc. In addition, many vehicle doors have sliding windows which need to be sealed against a window frame formed by a body part like a respective door.

In traditional sliding window sealing applications, a guide structure and a sealing structure on a rear end and/or a forward end of the window are formed by U-shaped structures which are used for guiding the window when it is slid up and down, but also serves for sealing purposes. On the other hand, an upper edge of the window is typically sealed against a frame structure by a so-called header profile.

In recent years, the outer appearance of vehicles in the door and window areas has become more and more important. Also, aerodynamic demands become higher. Therefore, it is often an object to provide a so-called flush design wherein for example a front window is arranged flush with a B-pillar structure and/or with a rear window. In those cases, it has become usual to arrange front and rear guide structures for guiding the sliding movement of the window on the inside of the window only. Such a concept is disclosed for example in document US 2020/0338966 A1.

In order to provide the area of a B-pillar with an aesthetic appearance, it is known to provide so-called appliques between the window of the front and the rear door, in order to add styling or cover unsightly portions of the vehicle. Further, the applique might be arranged flush with the front and/or the rear window.

Typically, a gap is provided in those cases between the applique and a respective window, which gap has a certain gap dimension in a first (longitudinal) direction of the vehicle, and extends essentially along a second (vertical) direction. It is not easy to seal the gap efficiently without jeopardizing the aesthetic appearance. A sealing strand which is used for this purpose typically has a carrier section made of a relatively hard material. The carrier section is typically used to attach the sealing strand to the fixed structure, which can be a B-pillar and/or an applique. Further, the sealing strand typically comprises a sealing section which is made of a relatively soft material and adapted to seal the inside against the outside of the vehicle.

Document US 2020/0086728 A1 relates to a seal assembly including a seal element which has at least one seal portion for sealing a vertically movable window pane of a vehicle door against a vertical window frame limb. The seal element additionally has a seal portion for forming a gap which is formed between a center that borders the vehicle door and a vertical window pane edge side facing the center.

Document JP S61-115712 A teaches to improve durability in an angular part of a weather strip, by forming each angular part of an outer side wall part and a seal part into being soft but forming the other part into being hard, and constitution the weather strip so as to keep off any glass suck-extrusion with the outer side wall, in case of the roof-side weather strip for a sashless car.

Document US 2003/019160 A1 discloses a weather strip which includes an attachment base and a hollow seal portion. The hollow seal portion is integrally moulded with the outer wall of the attachment base, and it makes a resilient contact with the door when the door of a vehicle is closed. The hollow seal portion has a first wall, second wall, third wall, fourth wall and bridge. The bridge is spanned between the second wall and the fourth wall. The hollow seal portion includes bending points which bend when the door is closed. The bending points include a connection part formed between the second wall and the third wall, a connection part formed between the third wall and the fourth wall, and a connection part formed between the first wall and the fourth wall.

Document DE 39 21 760 C2 discloses a sealing strip for the upper edge of a moveable vehicle window.

### SUMMARY

Against this background, it is an object of the present invention to provide an improved sealing strand for sealing a gap, and an improved sealing arrangement which includes such a sealing strand.

The above object is achieved by a sealing strand of claim 1, for sealing a gap between a fixed structure, as for example a B-pillar of a vehicle or an applique, and a moveable structure, as for example a sliding window, the gap having as gap dimension in a first direction and extending in a second direction which is essentially orthogonal to the first direction, the sealing strand comprising a carrier section and a sealing section, wherein the carrier section includes a fastening portion adapted to attach the sealing strand to the fixed structure, wherein the carrier section includes a first connecting portion which is adapted to be arranged adjacent to the fixed structure when the sealing strand is attached to the fixed structure, and includes a second connecting portion which is adapted to be arranged distant from the fixed structure when the sealing strand is attached to the fixed structure, and wherein the sealing section includes a surface sealing portion which is connected to the first connecting portion and to the second connecting portion of the carrier section and which forms a convex bulb adapted to contact an inner surface of the moveable structure.

In addition, the above object is achieved by a sealing arrangement of claim 12, for sealing a gap between a moveable structure and a fixed structure, comprising the above defined sealing strand and a second sealing strand which is adapted to be attached to the fixed structure and which includes a window sealing lip which is adapted to contact the inner surface of the moveable structure at a location that is more distant from the gap than the convex bulb.

The sealing section of the sealing strand can provide a sealing line between the sealing strand and the fixed structure which extends along the second direction. Further, the sealing strand can provide a second sealing line on the inside of the moveable structure.

Due to the fact that the surface sealing portion extends from the first connecting portion to the second connecting portion and contacts an inner surface of the moveable structure, the surface sealing portion extends essentially across the gap and essentially on the inside of the gap. Also, the convex bulb contacts preferably only the inside of the moveable structure. Therefore, an attractive appearance can be achieved, both in the open and closed states of the moveable structure. Further, the sealing strand achieves a high tolerance robustness. In addition, a high durability robustness can be achieved.

The sealing strand preferably is attached to an applique (so as to form a pre-assembled arrangement) which is mounted to a body of a vehicle in an assembly line.

The second sealing strand preferably is attached to the body of the vehicle, preferably to a B-pillar thereof.

Thereby, a high flexibility in assembly can be achieved, which is done by a simple process.

The carrier section may include a reinforcement portion made of a very hard material like metal. Preferably, however, the carrier section is uniformly made from one and the same material.

The terms upper, lower, front, rear, inside, outside etc. relate to the description of specific embodiments, but shall not limit the interpretation of the general teaching of the present disclosure.

The carrier section comprises a base portion from which the fastening portion extends in a first direction. The base portion may be arranged overlappingly with the gap as seen in a third direction which is essentially orthogonal to the first direction and the second direction. The fastening portion which extends from the base portion, can be formed by a web or a plurality of webs which extend from the base portion into the fixed portion, preferably into an area behind an outer surface of an applique as seen in the third direction from the outside.

The first connection portion extends from the base portion into the gap. In this case, it is easy to seal the fixed structure by means of the sealing section, particularly by the surface sealing portion which extends from the first connecting portion to the second connecting portion.

Therefore, a gap sealing lip is connected to the first connecting portion and is adapted to contact an edge portion of the fixed structure which faces to the gap.

Further, it is preferred if the carrier section includes a support portion which extends from a base portion of the carrier section, wherein the second connecting portion is arranged in the region of a free end of the support portion.

Particularly, while the first connecting portion extends from the base portion at the inside of the gap into the gap in the third direction, the support portion extends from the base portion to the opposite side in the third direction.

The support portion may be L-shaped in a cross sectional view, including a first L-portion which extends in the third direction to the inside, and a second L-portion connected to the first L-portion and extending essentially in the first direction. Preferably, the second L-portion extends in a direction opposite to the direction to which the fastening portion of the carrier section extends. Thereby, the second L-portion preferably extends across the gap on the inside thereof.

Preferably, the support portion is adapted to overlap the gap and a part of the moveable structure in the first direction, when seen in a third direction which is, as mentioned above, essentially orthogonal to the first direction and to the second direction.

The convex bulb which is formed by the surface sealing portion preferably is arranged between an edge of the moveable structure and the second connecting portion in the first direction.

Particularly, it is preferred if the surface sealing portion is adapted to not contact an edge of the moveable structure which faces to the gap.

With this embodiment, a high robustness can be achieved. Namely, the edge of a moveable structure such as sliding windows may have sharp portions which might produce wear on the sealing section during sliding motions.

In this respect, it is particularly preferred if the surface sealing portion comprises a concave bulb which is arranged between the convex bulb and the first connecting portion in the first direction.

The convex bulb is essentially what is seen from the outside through the gap (in the closed state of the moveable structure), which also contributes to the pleasant appearance of the sealing strand.

Further, it is generally preferred if the fastening portion of the carrier section includes a web portion which is adapted to be inserted into a web portion receptacle of the fixed structure.

The web portion receptacle is preferably formed by an applique attached to a B-pillar bodywork, but may also be formed by the B-pillar bodywork itself.

In this case, it is also preferred if the web portion is connected with at least one of (i) sealing lips of the sealing section, which seal the web portion against the web portion receptacle, and (ii) locking lips which lockingly engage into locking steps formed by the web portion receptacle.

The sealing performance can be further enhanced with these measures. The locking lips may be part of the carrier section. Preferably, however, they are formed by the sealing section. The sealing lips and/or the locking lips contribute to sealing the inside against the outside in the area of the fixed structure.

Further, it is preferred if the carrier section and the surface sealing portion form a closed hollow.

The closed hollow is closed in a cross sectional view (in the second direction). The closed hollow may be open at an upper and/or a lower end of the sealing strand in the second ( vertical) direction when attached to the fixed structure.

Due to the closed hollow, the aesthetic appearance can be further enhanced. Further, co-extrusion of the carrier section and the sealing section can be facilitated. The holding function of the carrier section on the hand and the sealing function of the surface sealing portion can be optimized in this case.

Further, it is preferred in this case if a reinforcement web is arranged within the closed hollow. Preferably, the reinforcement web extends between a support portion of the carrier section and a concave bulb of the surface sealing portion.

Further, it is preferred if a sealing lip extends from the surface sealing portion in the first direction and is adapted to contact a second sealing strand of a sealing arrangement.

The attachment of the sealing strand by means of the fastening portion can be made by pushing the web portion into the web portion receptacle, thereby preferably achieving a locking engagement between the web portion and the web portion receptacle.

In other embodiments, it is preferred if the fastening portion is attached to the fixed structure by means of a molded portion. In this case, it is preferred if the fixed structure is an applique which is to be attached to a B-pillar bodywork. In this case, the sealing strand and the applique can be preassembled. It is clear that preassembly of the sealing strand and an applique can also be made without a molded portion, simply by attaching the fastening portion to the applique.

Overall, it is also preferred the carrier section and the sealing section of the sealing strand are co-extruded, as mentioned above

The manufacturing process can thereby be facilitated.

In general, it is possible that the carrier section and the sealing section are made unitarily from a single material which is preferably a rubber elastomer and/or thermoplastic (elastomer) material.

In an alternative, it is preferred overall, if the carrier section is made of a relatively hard material and the sealing section is made of a relatively soft material

The relatively soft material of the sealing section is for example a rubber elastomer and/or thermoplastic (elastomer) material. The carrier section material is for example a rubber elastomer and/or thermoplastic (elastomer) material, adopting preferably the same material family as the sealing section.

The hardness of the sealing section is preferably in a range from 45 ShA (shore A hardness, ASTM D2240) to 75 ShA (shore A hardness, ASTM D2240).

The carrier section has a hardness which is preferably in a range from 70 ShA (shore A hardness, ASTM D2240) to 45 ShD (shore D hardness, ASTM D2240).

It will be understood that the afore-mentioned features and those to be described hereinafter cannot only be used in the respectively given combination, but also in different combinations or independently, without leaving the scope of the present invention as defined by the claims.

### BRIEF DESCRIPTION OF THE DRAWINGS

Further features and advantages of the invention can be taken from the subsequent description of preferred embodiments with reference to the drawings. In the drawings show:
- Fig. 1: is a partial side view of a vehicle including a door and a sliding window, wherein a sealing strand seals a gap between the window and an applique arrangement;
- Fig. 2: is a cross sectional view II-II in Fig. 1 and shows an embodiment of a sealing arrangement including the sealing strand and a second sealing strand;
- Fig. 3: is a view similar to Fig. 2 and includes a variation of the embodiment shown in Fig. 2; and
- Fig. 4: is a view similar to Fig. 2 and includes a variation of the embodiment shown in Fig. 2.

### EMBODIMENTS

In the following, embodiments of the present disclosure are described in detail.

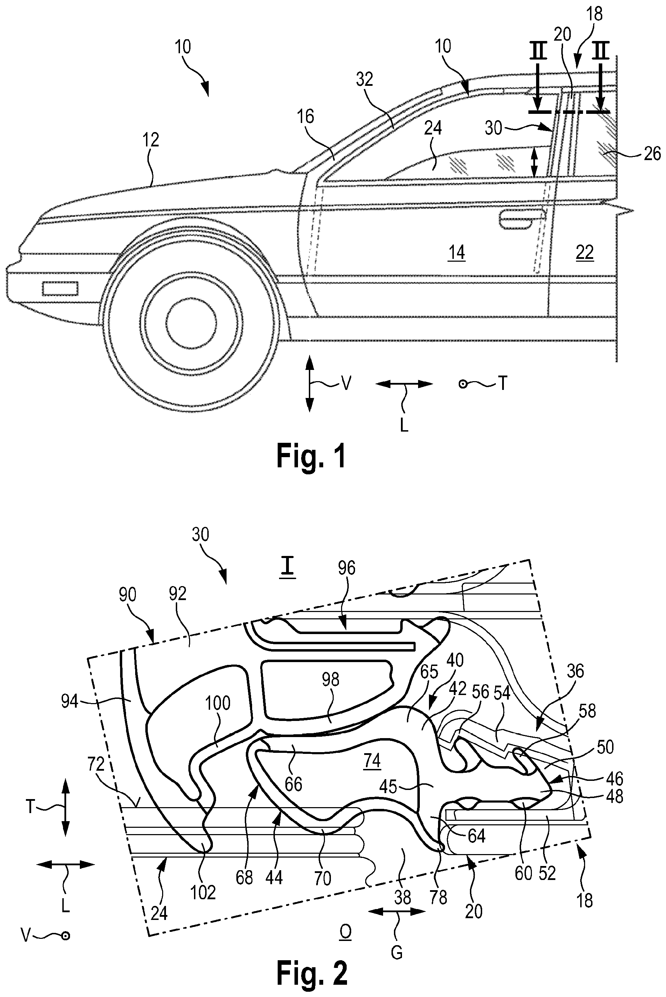

A vehicle like an automobile passenger car is schematically shown in Fig. 1 and generally denoted by 10. The vehicle 10 has a body 12, to which is hingedly connected a front door 14. The front door 14 extends essentially between a A-pillar region 16 and a B-pillar region 18. In the area of the B-pillar region 18, the vehicle includes an applique arrangement which is preferably attached to the body 12.

Further, the vehicle 10 includes a rear door 22 hingedly connected to the body 12.

The front door 14 includes a front door sliding window 24, which forms a moveable structure. The rear door 22 includes a rear door window 26, which may be a sliding window as well.

The front door sliding window 24 is sealed against the front door 14 and/or the body 12 by means of a sealing assembly not denoted in detail in Fig. 1. The sealing assembly, however, includes an upright B-pillar sealing arrangement 30 which seals the rear edge of the front door sliding window 24 against the B-pillar region 18 and/or the applique arrangement 20.

A similar sealing arrangement 30 may be located in the area of the front edge of the rear door window 26 and/or at other front or rear edges of windows of the vehicle. An upper edge of the respective windows is preferably sealed by a header sealing profile which is shown schematically in Fig. 1 at 32. Further, in Fig. 1, the front door sliding window 24 has slid half downwards, so as to expose a window opening 34.

The body 12 defines a first direction L, which is preferably a longitudinal direction of the vehicle 10. Further, the body 12 defines a second direction V which is preferably a vertical direction of the vehicle 10. In addition, the body 12 defines a third direction T, which is preferably a transverse direction of the vehicle 10. The three directions are also used to describe a sealing arrangement. The three directions L, V, T are preferably essentially orthogonal to each other, but may be arranged under different angles to each other, as long as the three directions are not parallel. The three directions L, V, T are shown schematically in Fig. 1 and in Fig. 2.

Preferably, the outer surface of the front door sliding window 24 and/or the rear door window 26 is formed flush with an outer surface of the applique arrangement 20. To this purpose, the front door window 24 and/or the rear door window 26 are preferably guided by means of sliding guides structures which are arranged on the inside of the respective window. Preferably, guide shoes or the like (not shown in the Figures) are fastened to the inner surface of the respective window 24, 26, which guide shoes are guided by guide rails (not shown in the Figures) arranged on the inside of the respective window 24, 26 and attached to the door bodywork.

In another embodiment, at least the front door window 24 may be guided only by guide structures below a waste line of the vehicle 10, namely in a frameless door structure.

Fig. 2 shows an example of an upright B-pillar sealing arrangement 30.

As is shown in Fig. 2, the body 12 includes a B-pillar bodywork 36 which forms a part of a fixed structure and to which is attached the applique arrangement 20. Further, Fig. 2 shows that a gap 38 is formed between a rear edge of the front door sliding window 24 and front edge of the applique arrangement 20 and the underlying B-pillar bodywork 36. A gap dimension in the first direction L is shown at G. The gap dimension G may be in a range from 5 mm to 16 mm, for example.

Further, Fig. 2 shows that the sealing arrangement 30 is used to seal an inside I of the vehicle 10 (particularly a passenger compartment) against an outside O thereof.

The sealing arrangement 30 includes a gap sealing strand 40. The sealing strand 40 extends along the rear edge of the front door sliding window in the area of the gap 38 and includes a carrier section 42 which is preferably made of a relatively hard material, and a sealing section 44 which is preferably made of a relatively soft material. The materials of the carrier section and the sealing section, respectively, may be formed from the same material family, for example rubber elastomers (e.g. EPDM) and/or thermoplastic (e.g. TBE) materials. As an alternative, the materials may be made from different material families. Preferably, however, the carrier section and the sealing section are co-extruded so as to form an extruded sealing strand 40.

The carrier section 42 includes a base portion 45. The base portion is arranged so as to overlap with the gap 38 in the first direction L (as seen in the third direction T). The base portion 45 is arranged on the inside of the front door window 24 and of the applique arrangement 20.

The carrier section 42 further includes a fastening portion 46 which extends from the base portion 45 in the first direction L, so as to overlap with the applique arrangement 20 in the first direction L. Particularly, the fastening portion 46 is arranged behind an outer surface of the applique arrangement 20, as seen from the outside O.

The fastening portion 46 includes a web portion 48 which is attached to a web portion receptacle 50 of the applique arrangement 20.

The web portion receptacle 50 includes an outer receptacle portion 52 which is essentially arranged and aligned in the first direction L and is arranged in parallel to an inner surface of an outer applique element of the applique arrangement 20. Preferably, the outer receptacle portion 52 is arranged directly behind the outer applique element of the applique arrangement 20. The web portion receptacle 50, further, includes an inner receptacle portion 54 which is connected to the outer receptacle portion 52 and extends slightly obliquely with respect to the first direction L.

Presently, the web portion receptacle 50 is part of the applique arrangement 20. In this case, the sealing strand 40 may be pre-assembled to the applique arrangement 20, for assembly of this combination to the B-pillar bodywork 36 at an assembly line of the vehicle, for example. However, the web portion receptacle 50 may be part of the B-pillar bodywork 36.

The inner receptacle portion 54 includes at least one locking step 56, preferably two locking steps 56. The sealing strand 40 includes locking lips 58 which engage at the locking steps 56 when the web portion 48 is inserted into the web portion receptacle 50.

On the other hand, the sealing strand 40 may include a number of sealing lips 60 which extend from the web portion 48 so as to contact an inner side of the outer receptacle portion 52.

The sealing lips 60 and/or the locking lips 58 may be part of the sealing section 44 of the sealing strand and may be used to seal the inside I against the outside O.

The carrier section 42 includes a first connecting portion 64. The first connecting portion 64 extends from the base portion 45 to the outside into the gap 38. However, the first connecting portion 64 preferably extends into the gap 38 approximately halfway in the third direction T.

Further, the carrier section 42 includes a support portion 65 which extends from the base portion 45 to the inside I.

The support portion 65 is L-shaped (as seen in the second direction) and includes a first L-portion which extends in the third direction T, and includes a second L-portion which essentially extends in the first direction L.

A connecting portion between the first and second L-portions may have a thicker cross section than other parts of the carrier section 42, so as to provide rigidity against a deflection of the second L-portion in the third direction T.

At the free end of the second L-portion, a second connecting portion 66 is provided. The second connecting portion 66 is arranged on a side opposite to the fastening portion 46 with respect to the gap 38 or with respect to the base portion 45 in the longitudinal direction L.

When viewed in the third direction T, the second connecting portion is located behind or overlaps the front door sliding window 24.

The sealing section 44 of the sealing strand 40 includes a window surface sealing portion 68. The window surface sealing portion 68 is connected to the first connecting portion 64 and to the second connecting portion 66 of the carrier section 42. The window surface sealing portion 68 is pre-shaped so as to form a convex bulb 70 which contacts an inner surface 72 of the front door window 24. It is noted here that Fig. 2 shows the sealing arrangement 30 in an elastically undeflected state so that the surface sealing portion 68 intersects the front door window 24. If the front door window 24 is opened, this is how the sealing arrangement 30 is shaped. If the front door window 24 is closed, at least the surface sealing portion 68 is deflected so that the convex bulb 70 contacts the inner surface 72 of the front door window 24 and forms a vertical sealing line.

The surface sealing portion 68 forms a closed hollow 74 together with the carrier section 42. The closed hollow 74 is surrounded by the surface sealing portion 68, the first connecting portion 64, the base portion 45, and the support portion 65.

A concave bulb 76 is provided between the convex bulb 70 and the first connecting portion 64 in the first direction L. Due to the concave bulb 76, deflection of the convex bulb 70 can be easily achieved. Further, it can be avoided that the surface sealing portion 68 contacts an edge of the front door window 24, which edge faces to the gap 38.

The sealing section 44 includes a gap sealing lip 78 which is connected to the first connecting portion 64 and contacts the applique arrangement 20 and/or the B-pillar bodywork 36. The gap sealing lip 78 prevents the entry of fluid into the web portion receptacle 50. This sealing effect is further enhanced by the locking lips 58 and/or the sealing lips 60.

When seen from the outside O, the appearance of the sealing strand 40 is attractive. The gap sealing lip 78 preferably continues with the outer surface of the applique arrangement 20. From the outside, essentially only the surface sealing portion 68 can be seen. The surface sealing portion 68 is preferably formed in one piece with the gap sealing lip 78, which enhances the positive appearance.

The sealing arrangement 30 may be arranged so as to include only the sealing strand 40.

In the present embodiment, however, the sealing arrangement 30 includes a second sealing strand 90. the second sealing strand 90 includes a second carrier section 92 and a second sealing section 94. The second carrier section 92 includes a second fastening portion 96 which is attached to the B-pillar bodywork 36 (but could also be attached to the applique arrangement 20). The second fastening portion 96 may include a reinforcement member. The second carrier section 92 is arranged between the second L-portion of the support portion 65 and a part of the B-pillar bodywork 36. Therefore, the second carrier section 92 may serve to hold the support portion 65 in position in the third direction T. In other words, the second carrier section 92 serves to avoid or reduce a deflection of the support portion 65 in the third direction. To this purpose, the second fastening portion 96 is connected to a support portion 98 which holds the support portion 65 of the carrier section 42 of the sealing strand 40 in the third direction T.

Another portion of the second carrier section 92 extends in a direction away from the sealing strand 40 in the first direction L.

Further, the second carrier section 92 includes an elastic sealing lip carrier portion 100. A window sealing lip 102 is connected to the lip carrier portion 100, so as to extend to and contact the inner surface 72 of the front door window 24. The window sealing lip 102 forms a second sealing line which essentially extends in the second (vertical) direction V. The window sealing lip 102 is arranged further distant from the gap 38 than the convex bulb 70 of the surface sealing portion 68.

The window sealing lip 102 may be connected to another portion of the second carrier section 92 as well, so that the second carrier section 92 and the window sealing lip 102 form another closed hollow, which allows to establish a good deflectability of the window sealing lip 102, so as to improve the sealing performance together with the convex bulb 70.

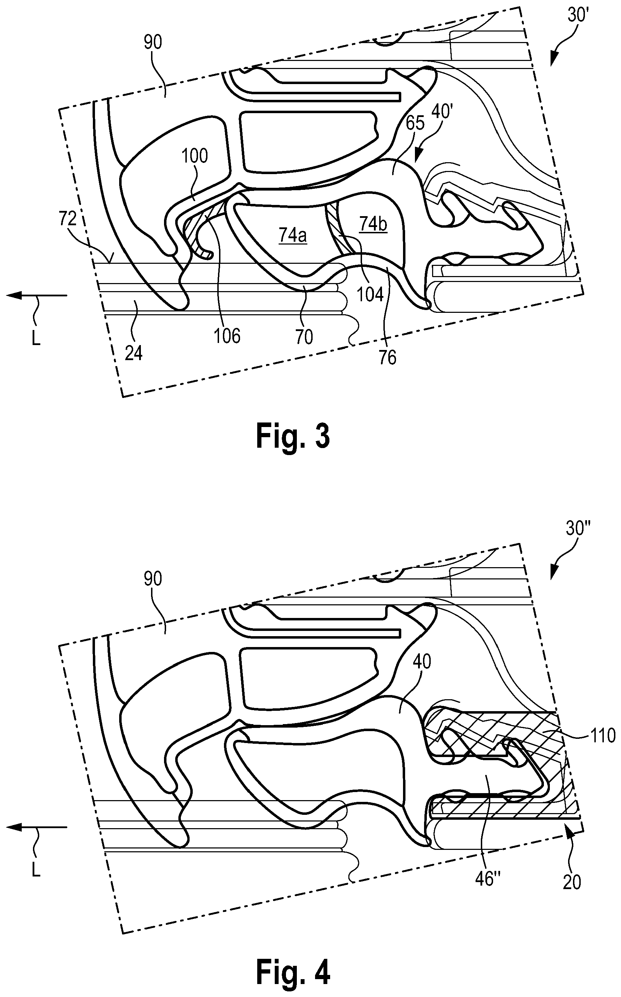

In Fig. 3 and in Fig. 4, further embodiments of the present disclosure are shown. These correspond to the embodiment shown in Fig. 2 with respect to structure and function. The same reference numerals are used. Only the differences are explained in detail below.

Fig. 3 shows another embodiment of a sealing arrangement 30'. As shown in Fig. 3, a reinforcement web 104 may be provided in the closed hollow 74, so as to divide the closed hollow 74 into a first closed hollow 74a and a second closed hollow 74b. The reinforcement web 104 may extend between the second L-portion of the support portion 65 and an inside of the concave bulb 76. The reinforcement web 104 may be used to increase the sealing pressure between the convex bulb 70 and the inner surface 72 of the front door window 24.

Further, as an additional or alternative modification of the embodiment of Fig. 2, Fig. 3 shows a supplemental sealing lip 106 which extends from a portion of the surface sealing portion 68 in essentially the first direction L. Preferably, the supplemental sealing lip 106 is connected to the surface sealing portion 68 in the area of the second connecting portion 66 and is arranged so as to extend essentially parallel to the elastic sealing lip carrier portion 100. The supplemental sealing lip 106 improves the sealing performance and avoids the entry of fluid into an area between the first sealing strand 40 and the second sealing strand 90.

Fig. 4 shows another embodiment of a sealing arrangement 30", wherein the fastening portion 46" of the sealing strand 40 is molded to the applique arrangement 20 and /or the B-pillar bodywork by means of a molded portion 110.

The applique arrangement 20 may be a plastic component arranged between the front door window 24 and the rear door window 26 in the above-described embodiments. However, the applique arrangement may also include an outer glass body.

In addition to the single reinforcement web 104, the sealing strand 40 may include more reinforcement webs. Further, the sealing strand may include two or more convex bulbs for providing additional sealing lines.

Further, additional supplemental sealing lips 106 may be provided at various locations in order to improve the water management. The supplemental sealing lips may have the function of water guidance lips.

In summary, the present invention provides a sealing arrangement which provides at least one sealing line (convex bulb 70) or two sealing lines (bulb 70 and sealing lip 102) at the inside of the window, without any sealing part of the sealing section contacting a rear edge of the window 24, which faces to the gap 38. The sealing strand 40 may be preassembled to an applique arrangement 20. The second sealing strand 90 may be pre-assembled to the applique arrangement 20. Preferably, however, it is attached to the B-pillar bodywork 36.

The first and the second sealing strands 40, 90 may each be co-extruded sealing strands. Therefore, they are easy to manufacture. The assembly process is easy, because at least the first sealing strand 40 may be preassembled to an applique arrangement 20. Due to the convex bulb 70, a high tolerance robustness is achieved. Due to the fact that the rear edge of the window 24 is not contacted by the sealing section, a high durability robustness is achieved.

As described above, the overall appearance of the sealing arrangement is very pleasant.

### Reference Numerals:

- 10: vehicle
- 12: body
- 14: front door
- 16: A-pillar region
- 18: B-pillar region
- 20: applique arrangement
- 22: rear door
- 24: front door sliding window (moveable structure)
- 26: rear door window

- 30: upright B-pillar sealing arrangement
- 32: header sealing arrangement
- 34: window opening
- 36: B-pillar bodywork (fixed structure)
- 38: gap
- 40: gap sealing strand (30)
- 42: carrier section
- 44: sealing section
- 45: base portion (42)
- 46: fastening portion (42)
- 48: web portion
- 50: web portion receptacle (20)
- 52: outer receptacle portion
- 54: inner receptacle portion
- 56: locking steps
- 58: locking lips
- 60: sealing lips
- 64: first connecting portion
- 65: support portion (42)
- 66: second connecting portion
- 68: window surface sealing portion (44)
- 70: convex bulb (68)
- 72: inner window surface
- 74: closed hollow (42-44)
- 76: concave bulb
- 78: gap sealing lip (44)

- 90: second sealing strand
- 92: second carrier section
- 94: second sealing section
- 96: second fastening portion
- 98: support portion (92)
- 100: elastic sealing lip carrier portion
- 102: window sealing lip
- 104: reinforcement web
- 106: sealing lip
- 110: molded portion

- L: longitudinal (first) direction
- V: vertical (second) direction
- L: transversal (third) direction
- I: inside
- O: outside
- G: gap dimension

## Claims

1. A sealing strand (40) for sealing a gap (38) between a fixed structure (36), as for example a B-pillar of a vehicle or an applique, and a moveable structure (24), as for example a sliding window, the gap (38) having as gap dimension (G) in a first direction (L) and extending in a second direction (V) which is essentially orthogonal to the first direction (L), the sealing strand (40) comprising:
- a carrier section (42), and
- a sealing section (44),
wherein the carrier section (42) includes a fastening portion (46) adapted to attach the sealing strand (40) to the fixed structure (36),
wherein the carrier section (42) includes a first connecting portion (64) which is adapted to be arranged adjacent to the fixed structure (36), and includes a second connecting portion (66) which is adapted to be arranged distant from the fixed structure,
wherein the sealing section (44) includes a surface sealing portion (68) which is connected to the first connecting portion (64) and to the second connecting portion (66) of the carrier section (42) and which forms a convex bulb (70) adapted to contact an inner surface (72) of the moveable structure (24);
wherein the carrier section (42) comprises a base portion (45) from which the fastening portion (46) extends in the first direction,
wherein the first connection portion (64) extends from the base portion (45) into the gap (38), and
**characterized in that** a gap sealing lip (78) is connected to the first connecting portion (64) and is adapted to contact an edge portion of the fixed structure (36) which faces to the gap (38).

2. The sealing strand of claim 1, wherein the carrier section (42) includes a support portion (65) which extends from a base portion (45) of the carrier section (42), wherein the second connecting portion (66) is arranged in the region of free end of the support portion (65).

3. The sealing strand of claim 2, wherein the support portion (65) is adapted to overlap the gap (38) and a part of the moveable structure (24), when seen in a third direction (T) which is essentially orthogonal to the first direction (L) and to the second direction (V).

4. The sealing strand of any of claims 1 to 3, wherein the surface sealing portion (68) is adapted to not contact an edge of the moveable structure which faces to the gap (38).

5. The sealing strand of claim 4, wherein the surface sealing portion (68) comprises a concave bulb (76) which is arranged between the convex bulb (70) and the first connecting portion (64).

6. The sealing strand of any of claims 1 to 5, wherein the fastening portion (46) of the carrier section (42) includes a web portion (48) which is adapted to be inserted into a web portion receptacle (50) of the fixed structure (36).

7. The sealing strand of claim 6, wherein the web portion (48) is connected with at least one of
- sealing lips (60) of the sealing section (44), which seal the web portion against the web portion receptacle (50), and
- locking lips (58) which lockingly engage into locking steps (56) formed by the web portion receptacle (50).

8. The sealing strand of any one of claims 1 to 7, wherein the carrier section (42) and the surface sealing portion (68) form a closed hollow (74).

9. The sealing strand of claim 8, wherein a reinforcement web (104) is arranged within the closed hollow (74) and preferably extends between a support portion (65) of the carrier section (42) and a concave bulb (76) of the surface sealing portion (68).

10. The sealing strand of any one of claims 1 to 9, wherein a sealing lip (106) extends from the surface sealing portion (68) and is adapted to contact a second sealing strand (90).

11. The sealing strand of any one of claims 1 to 10, wherein
- the fastening portion (46) is adapted to be attached to the fixed structure (36) by means of a molded portion (110), and/or wherein
- the carrier section (42) and the sealing section (44) of the sealing strand are co-extruded, and/or wherein
- the carrier section (42) is made of a relatively hard material, and the sealing section (44) is made of a relatively soft material.

12. A sealing arrangement for sealing a gap between a moveable structure (24) and a fixed structure (36), comprising:
- the sealing strand (40) of any one of claims 1 to 11, and
- a second sealing strand (90) which is adapted to be attached to the fixed structure (36) and which includes a window sealing lip (102) which is adapted to contact the inner surface (72) of the moveable structure (24) at a location that is more distant from the gap (38) than the convex bulb (70).

## Patentansprüche

1. Dichtungsstrang (40) zum Abdichten eines Spalts (38) zwischen einer festen Struktur (36), wie beispielsweise einer B-Säule eines Fahrzeugs oder einem Appliqué, und einer beweglichen Struktur (24), wie beispielsweise einem Schiebefenster, wobei der Spalt (38) eine Spaltabmessung (G) in einer ersten Richtung (L) aufweist und sich in einer zweiten Richtung (V) erstreckt, die im Wesentlichen orthogonal zu der ersten Richtung (L) ist, wobei der Dichtungsstrang (40) aufweist:
- eine Trägersektion (42), und
- eine Dichtungssektion (44),
wobei die Trägersektion (42) einen Befestigungsabschnitt (46) umfasst, der geeignet ist, den Dichtungsstrang (40) an der festen Struktur (36) zu befestigen,
wobei die Trägersektion (42) einen ersten Verbindungsabschnitt (64) umfasst, der dazu geeignet ist, benachbart zu der festen Struktur (36) angeordnet zu werden, und einen zweiten Verbindungsabschnitt (66) umfasst, der dazu geeignet ist, entfernt von der festen Struktur angeordnet zu werden,
wobei die Dichtungssektion (44) einen Oberflächendichtungsabschnitt (68) umfasst, der mit dem ersten Verbindungsabschnitt (64) und dem zweiten Verbindungsabschnitt (66) der Trägersektion (42) verbunden ist und der einen konvexen Wulst (70) bildet, der geeignet ist, eine Innenfläche (72) der beweglichen Struktur (24) zu kontaktieren;
wobei die Trägersektion (42) einen Basisabschnitt (45) umfasst, von dem der Befestigungsabschnitt (46) in der ersten Richtung vorsteht,
wobei der erste Verbindungsabschnitt (64) sich von dem Basisabschnitt (45) in den Spalt (38) hinein erstreckt,
**dadurch gekennzeichnet, dass**
eine Spaltdichtlippe (78) mit dem ersten Verbindungsabschnitt (64) verbunden ist und geeignet ist, einen Randabschnitt der festen Struktur (36) zu kontaktieren, der dem Spalt (38) zugewandt ist.

2. Dichtungsstrang nach Anspruch 1, wobei die Trägersektion (42) einen Stützabschnitt (65) umfasst, der sich von einem Basisabschnitt (45) der Trägersektion (42) erstreckt, wobei der zweite Verbindungsabschnitt (66) im Bereich eines freien Endes des Stützabschnitts (65) angeordnet ist.

3. Dichtungsstrang nach Anspruch 2, wobei der Stützabschnitt (65) geeignet ist, den Spalt (38) und einen Teil der beweglichen Struktur (24) zu überlappen, wenn er in einer dritten Richtung (T) betrachtet wird, die im Wesentlichen orthogonal zu der ersten Richtung (L) und zu der zweiten Richtung (V) ist.

4. Dichtungsstrang nach einem der Ansprüche 1 bis 3, wobei der Oberflächendichtungsabschnitt (68) geeignet ist, einen Rand der beweglichen Struktur, der dem Spalt (38) zugewandt ist, nicht zu kontaktieren.

5. Dichtungsstrang nach Anspruch 4, wobei der Oberflächendichtungsabschnitt (68) einen konkaven Wulst (76) umfasst, der zwischen dem konvexen Wulst (70) und dem ersten Verbindungsabschnitt (64) angeordnet ist.

6. Dichtungsstrang nach einem der Ansprüche 1 bis 5, wobei der Befestigungsabschnitt (46) der Trägersektion (42) einen Stegabschnitt (48) umfasst, der geeignet ist, in eine Stegabschnittsaufnahme (50) der festen Struktur (36) eingesetzt zu werden.

7. Dichtungsstrang nach Anspruch 6, wobei der Stegabschnitt (48) verbunden ist mit mindestens einem von:
- Dichtlippen (60) der Dichtungssektion (44), die den Stegabschnitt gegenüber der Stegabschnittsaufnahme (50) abdichten, und
- Verriegelungslippen (58), die verriegelnd in Verriegelungsstufen (56) eingreifen, die durch die Stegabschnittsaufnahme (50) ausgebildet sind.

8. Dichtungsstrang nach einem der Ansprüche 1 bis 7, wobei die Trägersektion (42) und der Oberflächendichtungsabschnitt (68) eine geschlossene Hohlkammer (74) bilden.

9. Dichtungsstrang nach Anspruch 8, wobei ein Verstärkungssteg (104) innerhalb der geschlossenen Hohlkammer (74) angeordnet ist und sich vorzugsweise zwischen einem Stützabschnitt (65) der Trägersektion (42) und einem konkaven Wulst (76) des Oberflächendichtungsabschnitts (68) erstreckt.

10. Dichtungsstrang nach einem der Ansprüche 1 bis 9, wobei eine Dichtlippe (106) von dem Oberflächendichtungsabschnitt (68) vorsteht und geeignet ist, einen zweiten Dichtungsstrang (90) zu kontaktieren.

11. Dichtungsstrang nach einem der Ansprüche 1 bis 10, wobei
- der Befestigungsabschnitt (46) dazu ausgebildet ist, mittels eines Formabschnitts (110) an der festen Struktur (36) befestigt zu werden und/oder wobei
- die Trägersektion (42) und die Dichtungssektion (44) des Dichtungsstrangs coextrudiert sind und/oder wobei
- die Trägersektion (42) aus einem relativ harten Material hergestellt ist und die Dichtungssektion (44) aus einem relativ weichen Material hergestellt ist.

12. Dichtungsanordnung zum Abdichten eines Spalts zwischen einer beweglichen Struktur (24) und einer festen Struktur (36), umfassend:
- den Dichtungsstrang (40) nach einem der Ansprüche 1 bis 11, und
- einen zweiten Dichtungsstrang (90), der geeignet ist, an der festen Struktur (36) befestigt zu werden und der eine Fensterdichtlippe (102) umfasst, die geeignet ist, die Innenfläche (72) der beweglichen Struktur (24) an einer Position zu kontaktieren, die weiter von dem Spalt (38) entfernt ist als der konvexe Wulst (70).

## Revendications

1. Brin d'étanchéité (40) permettant d'étanchéifier un espace (38) entre une structure fixe (36), comme par exemple un montant milieu d'un véhicule ou une applique, et une structure mobile (24), comme par exemple une fenêtre coulissante, l'espace (38) présentant une dimension d'espace (G) dans une première direction (L) et s'étendant dans une deuxième direction (V) qui est essentiellement orthogonale à la première direction (L), la bande d'étanchéité (40) comprenant :
- une section porteuse (42), et
- une section d'étanchéité (44),
dans lequel la section porteuse (42) comporte une partie de fixation (46) conçue pour fixer le brin d'étanchéité (40) à la structure fixe (36),
dans lequel la section porteuse (42) comporte une première partie de raccordement (64) qui est conçue pour être adjacente à la structure fixe (36), et comporte une seconde partie de raccordement (66) qui est conçue pour être éloignée de la structure fixe,
dans lequel la section d'étanchéité (44) comporte une partie d'étanchéité de surface (68) qui est raccordée à la première partie de raccordement (64) et à la seconde partie de raccordement (66) de la section porteuse (42) et qui forme un bulbe convexe (70) conçu pour entrer en contact avec une surface intérieure (72) de la structure mobile (24) ;
dans lequel la section porteuse (42) comprend une partie de base (45) à partir de laquelle la partie de fixation (46) s'étend dans la première direction,
dans lequel la première partie de raccordement (64) s'étend depuis la partie de base (45) dans l'espace (38), et
**caractérisé en ce que**
une lèvre d'étanchéité d'espace (78) est raccordée à la première partie de raccordement (64) et est conçue pour entrer en contact avec une partie de bord de la structure fixe (36) qui fait face à l'espace (38).

2. Brin d'étanchéité selon la revendication 1, dans lequel la section porteuse (42) comporte une partie de support (65) qui s'étend à partir d'une partie de base (45) de la section porteuse (42), dans lequel la seconde partie de raccordement (66) est agencée dans la région d'extrémité libre de la partie de support (65).

3. Brin d'étanchéité selon la revendication 2, dans lequel la partie de support (65) est conçue pour recouvrir l'espace (38) et une pièce de la structure mobile (24), lorsqu'elle est vue dans une troisième direction (T) qui est essentiellement orthogonale à la première direction (L) et à la deuxième direction (V).

4. Brin d'étanchéité selon l'une quelconque des revendications 1 à 3, dans lequel la partie d'étanchéité de surface (68) est conçue pour ne pas entrer en contact avec un bord de la structure mobile qui fait face à l'espace (38).

5. Brin d'étanchéité selon la revendication 4, dans lequel la partie d'étanchéité de surface (68) comprend un bulbe concave (76) qui est agencé entre le bulbe convexe (70) et la première partie de raccordement (64).

6. Brin d'étanchéité selon l'une quelconque des revendications 1 à 5, dans lequel la partie de fixation (46) de la section porteuse (42) comporte une partie de bande (48) qui est conçue pour être insérée dans un réceptacle de la partie de bande (50) de la structure fixe (36).

7. Brin d'étanchéité selon la revendication 6, dans lequel la partie de bande (48) est raccordée à au moins l'une parmi
- des lèvres d'étanchéité (60) de la section d'étanchéité (44), qui étanchéifie la partie de bande contre le réceptacle de la partie de bande (50), et
- des lèvres de verrouillage (58) qui entrent en prise de manière verrouillée dans les étapes de verrouillage (56) formées par le réceptacle de la partie de bande (50).

8. Brin d'étanchéité selon l'une quelconque des revendications 1 à 7, dans lequel la section porteuse (42) et la partie d'étanchéité de surface (68) forment un creux fermé (74).

9. Brin d'étanchéité selon la revendication 8, dans lequel une bande de renforcement (104) est agencée à l'intérieur du creux fermé (74) et s'étend de préférence entre une partie de support (65) de la section porteuse (42) et un bulbe concave (76) de la partie d'étanchéité de surface (68).

10. Brin d'étanchéité selon l'une quelconque des revendications 1 à 9, dans lequel une lèvre d'étanchéité (106) s'étend depuis la partie d'étanchéité de surface (68) et est conçue pour entrer en contact avec un second brin d'étanchéité (90).

11. Brin d'étanchéité selon l'une quelconque des revendications 1 à 10, dans lequel
- la partie de fixation (46) est conçue pour être fixée à la structure fixe (36) au moyen d'une partie moulée (110), et/ou dans lequel
- la section porteuse (42) et la section d'étanchéité (44) du brin d'étanchéité sont coextrudées, et/ou dans lequel
- la section porteuse (42) est faite d'un matériau relativement dur, et la section d'étanchéité (44) est faite d'un matériau relativement mou.

12. Dispositif d'étanchéité permettant d'étanchifier un espace entre une structure mobile (24) et une structure fixe (36), comprenant :
le brin d'étanchéité (40) selon l'une quelconque des revendications 1 à 11, et
- un second brin d'étanchéité (90) qui est conçu pour être fixé à la structure fixe (36) et qui comporte une lèvre d'étanchéité de fenêtre (102) qui est conçue pour entrer en contact avec la surface intérieure (72) de la structure mobile (24) à un emplacement qui est plus éloigné de l'espace (38) que le bulbe convexe (70).
